# EUROPEAN PATENT APPLICATION

(11) **EP 4 717 813 A1**
(43) Date of publication of application: **01.04.2026**
(21) Application number: 24836178.4
(22) Date of filing: 13.05.2024
(51) Int. Cl.: D06F 58/38, D06F 58/26, H02M 1/00, H05B 6/50, H05B 6/62, H05B 6/54, D06F 103/44, D06F 105/28

(54) **DRYER AND CONTROLLING METHOD THEREOF**

(30) Priority: 03.07.2023 KR 20230086115; 08.09.2023 KR 20230119933
(71) Applicant: Samsung Electronics Co., Ltd., Suwon-si, Gyeonggi-do 16677 (KR)
(72) Inventor: LEE, Kyungmin, Suwon-si Gyeonggi-do 16677 (KR); KIM, Jihoon, Suwon-si Gyeonggi-do 16677 (KR); JEONG, Seogyong, Suwon-si Gyeonggi-do 16677 (KR)
(74) Representative: Gulde & Partner
(86) International application number: PCT/KR2024/006451
(87) International publication number: WO 2025/009729

(57) **Abstract**

A dryer 1 includes: an alternating current (AC) power supply 100 configured to supply an input voltage; a rectifier 200 configured to rectify the supplied input voltage; a power amplifier 300 configured to amplify the rectified input voltage to provide an output voltage; a plurality of electrodes 500 to which the output voltage is applied; a matching circuit 400 connected between the power amplifier 300 and the plurality of electrodes 500 and configured to correct a waveform of the output voltage provided from the power amplifier 300; and at least one processor 601 configured to detect a power value corresponding to the rectified input voltage and obtain a magnitude of the output voltage provided from the power amplifier 300, wherein the at least one processor 601 may be configured to detect the power value corresponding to the rectified input voltage, based on the magnitude of the output voltage provided from the power amplifier 300 being less than or equal to a defined reference voltage Vr.

## Description

### [Technical Field]

The disclosure relates to a dryer and a method for controlling the same.

### [Background Art]

Existing dryers operate by heating an object to be dried at high temperatures. However, high-temperature drying may cause damage and shrinkage of the object to be dried. As a result, a method capable of drying at low temperatures without causing damage is required.

A dryer using dielectric heating may dry at a low temperature. Dielectric heating is a phenomenon in which, when an insulating material is placed in a high-frequency electric field, heat is generated in the insulating material itself due to friction between molecules. Accordingly, by applying a voltage with an object to be dried between the electrodes, the object to be dried may be dried by the dielectric heating phenomenon.

### [Disclosure]

### [Technical Problem]

The disclosure provides a dryer capable of drying an object to be dried using dielectric heating, and a method for controlling the same.

According to an embodiment of the disclosure, a dryer may include: an alternating current (AC) power supply 100 configured to supply an input voltage; a rectifier 200 configured to rectify the supplied input voltage; a power amplifier 300 configured to amplify the rectified input voltage to provide an output voltage; a plurality of electrodes 500 to which the output voltage is applied; a matching circuit 400 connected between the power amplifier 300 and the plurality of electrodes 500 and configured to correct a waveform of the output voltage provided from the power amplifier 300; and at least one processor 601 configured to detect a power value corresponding to the rectified input voltage and obtain a magnitude of the output voltage provided from the power amplifier 300, wherein the at least one processor 601 may be configured to detect the power value corresponding to the rectified input voltage, based on the magnitude of the output voltage provided from the power amplifier 300 being less than or equal to a defined reference voltage Vr.

According to an embodiment of the disclosure, a method for controlling a dryer 1 may include: supplying an input voltage through an AC power supply 100; rectifying the supplied input voltage through a rectifier 200; amplifying the rectified input voltage to provide an output voltage through a power amplifier 300; detecting a power value corresponding to the rectified input voltage based on a magnitude of the output voltage being less than or equal to a defined reference voltage Vr; controlling a matching circuit 400 to correct a waveform of the output voltage based on the detected power value; and controlling the power amplifier 300 to apply the output voltage to a plurality of electrodes 500 based on the magnitude of the output voltage being greater than the defined reference voltage Vr.

According to the disclosure, circuit elements such as sensors may operate normally, while driving a circuit of a dryer 1 using dielectric heating which is driven by high output and high voltage.

In addition, by optimizing and operating a power supply time period and a power value detection time period based on a magnitude of output voltage, a noise occurring when driven by high frequency and high output may be prevented, and power may be efficiently supplied.

Technical aspects that can be achieved by the disclosure are not limited to the above-mentioned aspects, and other technical aspects not mentioned will be clearly understood by one of ordinary skill in the technical art to which the disclosure belongs from the following description.

### [Description of Drawings]

FIG. 1 illustrates a circuit structure of a dryer according to an embodiment.
FIG. 2 is a flowchart illustrating a method for controlling a dryer according to an embodiment.
FIG. 3 is a graph illustrating a control method according to an output voltage provided from a power amplifier of a dryer according to an embodiment.
FIG. 4 is a graph illustrating a control method according to an output voltage provided from a power amplifier of a dryer according to an embodiment.
FIG. 5 is a graph illustrating a relationship between supply power and minimum voltage for performing a power supply operation according to an embodiment.
FIG. 6 is a flowchart illustrating a method for controlling a dryer according to an embodiment.
FIG. 7 is a graph illustrating a control method according to an output voltage provided from a power amplifier of a dryer according to an embodiment.
FIG. 8 is a graph illustrating a control method according to an output voltage provided from a power amplifier of a dryer according to an embodiment.
FIG. 9 is a flowchart illustrating a method for controlling a dryer according to an embodiment.
FIG. 10 is a graph illustrating a control method according to an output voltage provided from a power amplifier of a dryer according to an embodiment.
FIG. 11 is a flowchart illustrating a method for controlling a dryer according to an embodiment.
FIG. 12 is a graph illustrating a control method according to an output voltage provided from a power amplifier of a dryer according to an embodiment.
FIG. 13 is a flowchart illustrating a method for controlling a dryer according to an embodiment.
FIG. 14 is a flowchart illustrating a method for controlling a dryer according to an embodiment.
FIG. 15 is a flowchart illustrating a method for controlling a dryer according to an embodiment.
FIG. 16 is a graph illustrating a control method according to an output voltage provided from a power amplifier of a dryer according to an embodiment.
FIG. 17 illustrates a three-phase circuit structure of a dryer according to an embodiment.
FIG. 18 is a graph illustrating a control method according to a three-phase output voltage provided from a plurality of power amplifiers of a dryer according to an embodiment.

### [Modes of the Invention]

Embodiments described in the disclosure and configurations shown in the drawings are merely examples of the embodiments of the disclosure, and may be modified in various different ways at the time of filing of the present application to replace the embodiments and drawings of the disclosure.

Like reference numerals may be used for like or related elements throughout the drawings.

The singular form of a noun corresponding to an item may include one or more items unless the context states otherwise.

As used herein, each of the expressions "A or B," "at least one of A and B," "at least one of A or B," "A, B, or C," "at least one of A, B, and C," and "at least one of A, B, or C," may include one or all possible combinations of the items listed together with a corresponding expression among the expressions.

The expression "and/or" is interpreted to include a combination or any of associated elements.

It will be understood that the terms "first", "second", etc., may be used only to distinguish one component from other components, and are not intended to limit the corresponding component in other aspects (e.g., importance or order).

In addition, the terms "front," "rear," "top," "bottom," "side," "left," "right," "upper," "lower" etc., used in the following description are defined based on the drawings, and the shape and position of each component are not limited by these terms.

It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when one component is referred to as being "on" or "over" another component, it may be directly on the other component or intervening components may also be present.

Hereinafter, a dryer 1 according to various embodiments and a method for controlling the same will be described in detail with reference to accompanying drawings. In describing with reference to the accompanying drawings, like reference numerals may be used for like or related elements, and duplicate descriptions thereof may be omitted.

The dryer 1 according to the disclosure uses a drying method using a dielectric heating phenomenon, not a drying method by applying heat to the surface of an object to be dried using a heat source such as a heating wire, as in an existing clothes dryer.

The dielectric heating phenomenon refers to heating caused by dielectric loss generated in an insulating material placed in an electric field formed by a high-frequency power source. That is, when a dielectric is placed between electrodes and a high-frequency voltage is applied to both electrodes, the dipoles constituting the dielectric vibrate in response to the applied frequency as the alternating electric field changes. Due to the vibration, frictional heat is generated in the dipoles such as water, thereby heating the dielectric.

That is, compared to a drying method by applying heat to the surface, the dielectric heating method, which corresponds to internal heating, may uniformly heat the moisture contained in the object to be dried in a short time. Accordingly, by using the dielectric heating method, the disadvantages of the method of applying heat to the surface of the object to be dried, such as in an existing clothes dryer, may be compensated.

For example, the dryer 1 using dielectric heating according to the disclosure may prevent plastic deformation that may occur when heat is applied. Accordingly, the clothes dryer to which the dielectric heating method is applied may prevent the size of clothes from shrinking due to plastic deformation of fibers. Accordingly, the types of clothes that may be put into the dryer 1 are not limited.

In addition, the dryer 1 using dielectric heating according to the disclosure does not use surface heating, and uniform heating may be achieved, and thus a motor for rotating a drying container, such as a drum, is not required to uniformly apply heat, as in an existing clothes dryer.

Further, products to which the dryer 1 using the dielectric heating method of the disclosure is applicable are not limited to clothes dryers, clothes treating apparatuses, clothes care apparatuses, etc., as in the above example. For example, the dryer 1 according to the disclosure may be applied to food dryers, food waste treatment apparatuses, microwave ovens, etc., which include a function of drying food.

In addition, the dryer 1 using the dielectric heating method of the disclosure is not limited to household use, and is applicable to various medical and industrial uses. For example, the dryer 1 according to the disclosure may be applied to hyperthermia treatment devices, deep heat therapy devices, wood dryers, and the like.

Various circuits may be included in the dryer 1 using dielectric heating. Basically, the dryer 1 may include a power factor correction (PFC) circuit for correcting the power factor by receiving an alternating current (AC) voltage of 220V. For example, the PFC circuit may receive a 220V AC voltage and output a 400V direct current (DC) voltage.

In addition, the dryer 1 may include a DC/DC converter that steps down the DC voltage output from the PFC to a desired magnitude of DC voltage. In addition, the dryer 1 may include a power amplifier 300 generating high-frequency high-output power based on the DC voltage output from the DC/DC converter, a matching circuit for correcting the waveform that changes during operation, and electrodes 500 to which voltage is applied.

The dryer 1 according to the disclosure may supply high-frequency and high-output power. General converters used in home appliances may switch at a low frequency of several tens of kHz, and may be driven by high output. In addition, general power amplifiers 300 used in communication devices may switch at a high frequency of several tens to several hundreds of MHz, and may be driven by low output.

In other words, dryers are generally driven by low frequency and high output or high frequency and low output. However, in the case of the dryer 1 using dielectric heating according to the disclosure, a circuit capable of being driven by high frequency of several tens of MHz and high output may be required.

For example, a circuit capable of being driven by a high frequency of 13.56MHz or more and a high output of 1kW or more may be required. Accordingly, a Class E power amplifier 300 may be used to be suitable for high output.

Existing circuits include a DC/DC converter and output a DC voltage, and thus the constant voltage may be continuously applied. In the case of low-power driving, the constant voltage may be continuously applied as described above. However, in a case where high-power driving is required due to a large amount of object to be dried, disadvantages may occur.

In order for optimal power to be supplied, a power value of the circuit during operation requires to be detected, and impedance compensation requires to be performed through the matching circuit 400 based on the detected power value. However, when driven by high frequency and high output, switching noise generated in the circuit may interfere with sensor operation.

In other words, the circuit elements developed so far have been optimized for driving at low frequency and high output or high frequency and low output. Accordingly, robustness against noise in high-frequency and high-output driving of MHz- and Kw-class has not been established, and thus general elements may exhibit reduced performance during operation.

Accordingly, the dryer 1 using dielectric heating according to the disclosure may include a circuit structure in which circuit elements such as sensors may operate normally and influence of switching noise may be reduced even when driving a high-frequency and high-output circuit.

Hereinafter, the dryer 1 and the control method thereof according to the disclosure will be described in detail.

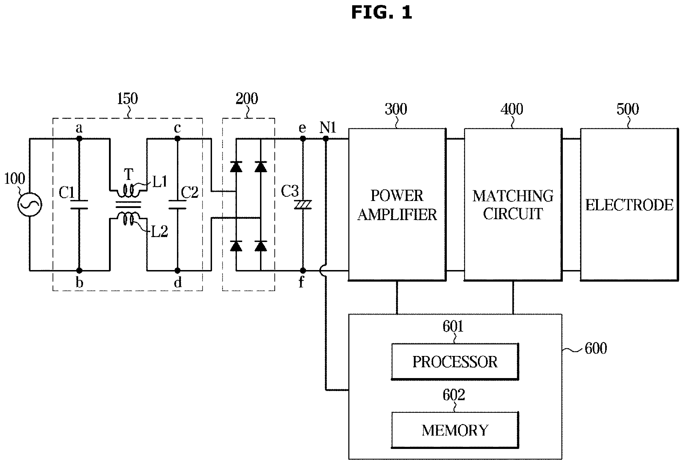

FIG. 1 illustrates a circuit structure of the dryer 1 according to an embodiment.

Referring to FIG. 1, the dryer 1 according to the disclosure may include an AC power supply 100, an electro-magnetic interference (EMI) filter 150, a rectifier 200, a power amplifier 300, a plurality of electrodes 500, a matching circuit 400, and a controller 600 that controls each of the aforementioned components.

The AC power supply 100 may supply an alternating current input voltage. The input voltage supplied from the AC power supply 100 may be 220V. The supplied input voltage may be transmitted to the EMI filter 150. Both ends of the AC power supply 100 may be connected to a node a and a node b, respectively.

The EMI filter 150 may remove noise included in the supplied input voltage. The EMI filter 150 may include a first capacitor C1, a transformer T, a second capacitor C2, a node a, a node b, a node c, and a node d.

The first capacitor C1 may be connected in parallel with the AC power supply 100 between the node a and the node b.

The transformer T may include a first winding L1 and a second winding L2. The first winding L1 and the second winding L2 may be wound in the same direction. The first winding L1 may be connected between the node a and the node c. The second winding L2 may be connected between the node b and the node d. That is, the transformer T may be connected in parallel between the first capacitor C1 and the second capacitor C2.

The second capacitor C2 may be connected in parallel with the transformer T between the node c and the node d.

The rectifier 200 is a type of circuit element or device for converting alternating current to direct current. The rectifier 200 may be classified into a half-wave rectifier 200 and a full-wave rectifier 200. The half-wave rectifier 200 may output only the positive section of the signal, and the full-wave rectifier 200 may output the negative section of the signal as a positive section. Accordingly, using the full-wave rectifier 200 may double the frequency, and may provide an average output voltage twice that of the half-wave rectifier 200, thereby improving the utilization rate of the power source.

As such, as shown in FIG. 1, the rectifier 200 in the circuit of the dryer 1 according to the disclosure may include a full-wave rectifier.

The full-wave rectifier may include two or more diodes. For example, the full-wave rectifier may include four diodes. Specifically, the full-wave rectifier may be provided in a form in which two half-wave rectifiers, each having two diodes connected in series, are connected in parallel.

The input voltage passing through the EMI filter 150 and the full-wave rectifier may have a pulsating current waveform. For example, in a case where the input voltage supplied from the AC power supply 100 has a waveform with a frequency of 60Hz, the input voltage rectified through the EMI filter 150 and the full-wave rectifier may have a pulsating current waveform with a frequency of 120Hz.

Meanwhile, the dryer 1 according to the disclosure may further include a third capacitor C3, a node e connected to one end of the rectifier 200, and a node f connected to the other end of the rectifier 200. The third capacitor C3 may be connected in parallel with the rectifier 200 between the node e and the node f.

The power amplifier 300 may be connected to the node e. The power amplifier 300 may receive the rectified input voltage from the rectifier 200 through the node e.

The power amplifier 300 may amplify the rectified input voltage to provide an output voltage. Accordingly, power of a magnitude capable of driving the load required by an application may be supplied through the power amplifier 300.

A plurality of electrodes 500 may be provided. The output voltage provided from the power amplifier 300 may be applied to the plurality of electrodes 500. As the output voltage is applied to the plurality of electrodes 500, an object to be dried may be dried by the dielectric heating method.

When driven in the above manner, impedance may change over time due to various causes, such as heat generation, aging, and transmission lines. Aging may refer to change in the characteristics of a device during use. Once the impedance changes and becomes distorted, optimal power may not be supplied. Accordingly, optimal power requires to be supplied by periodically detecting a power value (power level sensing) and performing impedance matching based on the power level sensing. The above effect may be achieved by the matching circuit 400.

The matching circuit 400 may be connected between the power amplifier 300 and the plurality of electrodes 500. In addition, the matching circuit 400 may correct the waveform of the output voltage provided from the power amplifier 300.

The controller 600 may be electrically connected to the AC power supply 100, the power amplifier 300, and the matching circuit 400, and may control each connected component. The controller 600 may be connected to a first node N1 provided between the rectifier 200 and the power amplifier 300.

In addition, the controller 600 may include at least one processor 601 and at least one memory 602. The controller 600 may include hardware such as a central processing unit (CPU) and the memory 602, and software such as a control program. For example, the controller 600 may include at least one memory 602 that stores algorithms and program-type data for controlling the operation of components in the dryer 1, and at least one processor 601 that performs the aforementioned operations using data stored in the at least one memory 602. The memory 602 and the processor 601 may each be implemented as separate chips. The processor 601 may include one or more processor chips or one or more processing cores. The memory 602 may include one or more memory chips or one or more memory blocks. In addition, the memory 602 and the processor 601 may be implemented as a single chip.

Control operations of the controller 600 will be described in detail below.

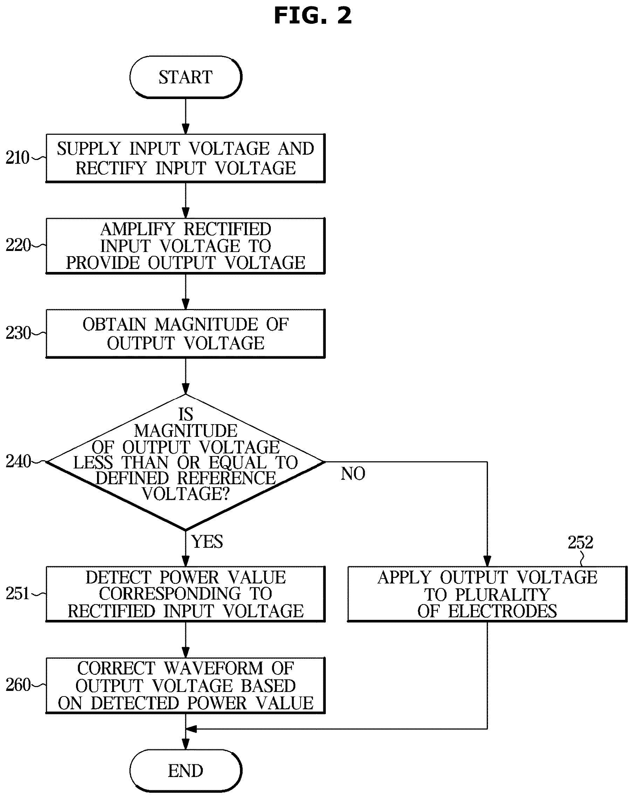

FIG. 2 is a flowchart illustrating a control method of the dryer 1 according to an embodiment.

Referring to FIG. 2, the controller 600 may control the AC power supply 100 to supply an input voltage. The input voltage supplied from the AC power supply 100 may be transmitted to the rectifier 200. The rectifier 200 may rectify the input voltage (210).

The rectified input voltage may be transmitted to the power amplifier 300. The power amplifier 300 may amplify the rectified input voltage to provide an output voltage (220).

The controller 600 may obtain a magnitude of the output voltage provided from the power amplifier 300 (230).

The controller 600 may perform a series of control operations by comparing the obtained magnitude of the output voltage with the magnitude of a defined reference voltage Vᵣ. To this end, the controller 600 may pre-determine a magnitude of the reference voltage. The controller 600 may determine whether the magnitude of the output voltage is less than or equal to the defined reference voltage Vᵣ (240).

The controller 600 may detect a power value corresponding to the rectified input voltage, based on the magnitude of the output voltage being less than or equal to the defined reference voltage Vᵣ (251). When the magnitude of the output voltage is large, excessive switching noise may occur, and thus the power value may not be accurately detected. Accordingly, the power value is detected only when the magnitude of the output voltage is less than or equal to the defined reference voltage.

The controller 600 may control the power amplifier 300 to apply the output voltage to the plurality of electrodes 500, based on the magnitude of the output voltage exceeding the defined reference voltage Vᵣ (252). Because it is more efficient to supply power when the magnitude of the output voltage is large, power is supplied only when the magnitude of the output voltage is greater than the defined reference voltage.

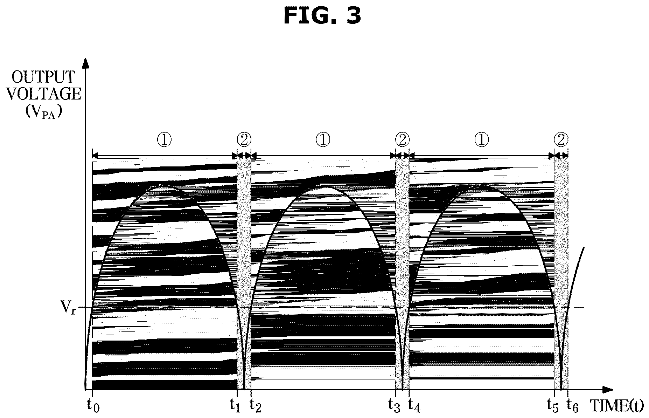

FIG. 3 is a graph illustrating a control method according to the output voltage provided from the power amplifier 300 of the dryer 1 according to an embodiment. In FIG. 3, the x-axis may represent time t, and the y-axis may represent the output voltage provided from the power amplifier 300. In FIG. 3, ① indicates a time period during which a power supply operation is performed, and (2) indicates a time period during which a power value is detected.

Referring to FIG. 3, it may be confirmed that the output voltage in the time periods t0~t1, t2~t3, and t4~t5, represented by dark shading, is greater than the reference voltage Vᵣ. Accordingly, in the time periods t0~t1, t2~t3, and t4~t5, the controller 600 may control the power amplifier 300 to apply the output voltage to the plurality of electrodes 500.

Similarly, in FIG. 3, it may be confirmed that the output voltage in the time periods t1~t2, t3~t4, and t5~t6, represented by light shading, is less than the reference voltage Vᵣ. Accordingly, in the time periods t1~t2, t3~t4, and-t5~t6, the controller 600 may detect a power value corresponding to the rectified input voltage.

As described above, by dividing the operation into a power supply operation and a power value detection operation based on the magnitude of the output voltage, the noise when driven by high frequency and high output may be prevented and power supply may be efficiently performed.

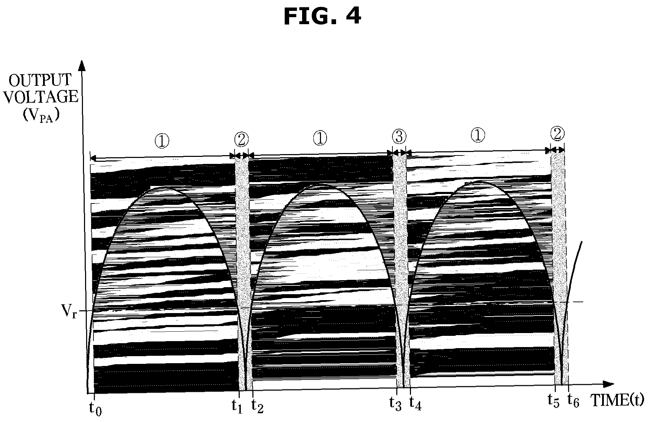

FIG. 4 is a graph illustrating a control method according to the output voltage provided from the power amplifier 300 of the dryer 1 according to an embodiment. In FIG. 4, the x-axis may represent time t, and the y-axis may represent the output voltage provided from the power amplifier 300. In FIG. 4, ① indicates a time period during which a power supply operation is performed, ② indicates a time period during which a power value is detected, and ③ indicates a time period during which impedance matching or output voltage correction is performed.

Referring to FIG. 2 and FIG. 4, the controller 600 may control the matching circuit 400 to correct a waveform of the output voltage based on the detected power value (260).

Referring to FIG. 4, it may be confirmed that the output voltage in the time periods t0~t1, t2~t3, and t4~t5, represented by dark shading, is greater than the reference voltage Vᵣ. Accordingly, in the time periods t0~t1, t2~t3, and t4~t5, the controller 600 may control the power amplifier 300 to apply the output voltage to the plurality of electrodes 500.

Similarly, in FIG. 4, it may be confirmed that the output voltage in the time periods t1~t2, t3~t4, and t5~t6, represented by light shading, is less than the reference voltage Vᵣ. Accordingly, in the time periods t1~t2, t3~t4, and t5~t6, the controller 600 may detect a power value corresponding to the rectified input voltage, or may correct the waveform of the output voltage based on the detected power value. For example, as shown in FIG. 4, in the time periods t1~t2 and t5~t6, the power value may be detected, and in t3~t4, the waveform of the output voltage may be corrected based on the detected power value.

Because the Class E power amplifier 300 is driven by high frequency and high output, a main switch included in the Class E power amplifier 300 needs to satisfy zero-voltage switching. In a case where zero-voltage switching is not achieved, the elements (devices) may be damaged due to energy loss caused by hard switching.

In general switching devices such as a metal-oxide semiconductor field-effect-transistor (MOSFET) and gallium nitride (GAN), parasitic capacitance (Coss) varies according to the source-drain voltage. Because resonant frequency depends on the parasitic capacitance, at high voltages, the parasitic capacitance becomes small, and the resonant frequency of the Class E power amplifier 300 may increase. Accordingly, the resonant period becomes shorter, and zero-voltage switching may be more readily achieved.

However, at low voltages, the parasitic capacitance increases, and the resonant frequency of the Class E power amplifier 300 may be low. Accordingly, the resonant period becomes longer, and zero-voltage switching may not be readily achieved. Accordingly, the power supply operation requires to be minimized in time periods where the voltage is low.

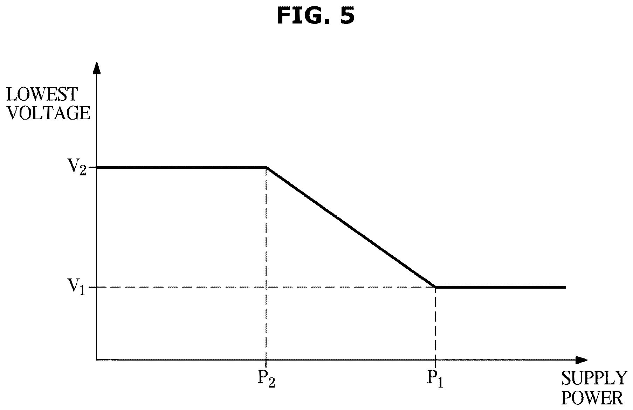

FIG. 5 is a graph showing a relationship between supply power and minimum voltage for performing a power supply operation.

In FIG. 5, the x-axis may represent the power to be supplied (supply power), and the y-axis may represent the magnitude of the minimum voltage for performing a power supply operation.

In the dryer 1 according to the disclosure, the magnitude of the power to be supplied may vary as the load changes, such as the amount of the object to be dried and the degree of drying. Here, the load change may include that the load changes in real time during operation, and that the amount of the object to be dried that is input before operation varies depending on the case.

The controller 600 may control the operation of applying an output voltage differently depending on the magnitude of the supply power corresponding to the load. In other words, the controller 600 may determine a minimum voltage that serves as a reference for performing the power supply operation based on the magnitude of the supply power corresponding to the load.

Specifically, when supplying high power, the entire time period for supplying power may be used, based on the magnitude of the output voltage being greater than a defined reference voltage Vᵣ, because there may be cases where even low voltage regions require to be used to supply high power.

In addition, when supplying low power, a part of the time period for supplying power may be used, because the desired power may be supplied without using even low voltage regions to supply low power. Accordingly, when supplying low power, only the time period of high output voltage may be used.

Here, the controller 600 may pre-set the magnitude of the supply power that distinguishes between high power and low power.

Referring to FIG. 5, the controller 600 may determine the minimum voltage for performing the power supply operation as a first voltage value V₁, based on the magnitude of the supply power being greater than a preset first power value P₁.

In addition, the controller 600 may determine the minimum voltage for performing the power supply operation as a second voltage value V₂, based on the magnitude of the supply power being less than a preset second power value P₂. Here, the preset second power value P₂ may be less than the preset first power value P₁.

In addition, the controller 600 may determine the minimum voltage for performing the power supply operation to be greater than or equal to the first voltage value V₁ and less than or equal to the second voltage value V₂, based on the magnitude of the supply power being greater than or equal to the preset second power value P₂ and less than or equal to the preset first power value P₁. Here, the controller 600 may determine the minimum voltage for performing the power supply operation to decrease as the magnitude of the supply power increases. Here, the second voltage value V₂ may be greater than the first voltage value V₁.

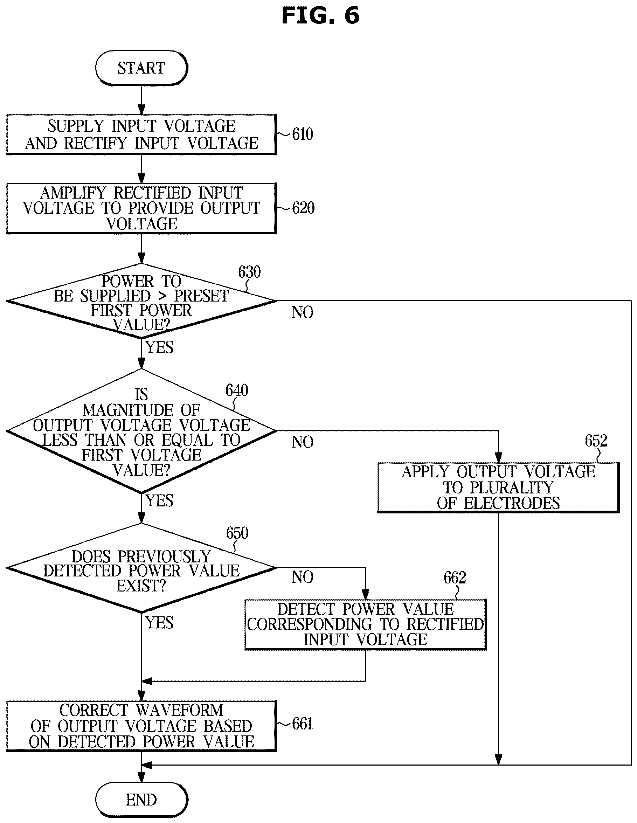

FIG. 6 is a flowchart illustrating a control method of the dryer 1 according to an embodiment.

Referring to FIG. 5 and FIG. 6, the controller 600 may control the AC power supply 100 to supply an input voltage. The input voltage supplied from the AC power supply 100 may be transmitted to the rectifier 200. The rectifier 200 may rectify the input voltage (610).

The rectified input voltage may be transmitted to the power amplifier 300. The controller 600 may control the power amplifier 300 to amplify the rectified input voltage to provide an output voltage (620).

The controller 600 may determine a minimum voltage for performing the power supply operation based on a magnitude of the supply power corresponding to the load. For example, the controller 600 may determine whether the magnitude of the supply power is greater than a preset first power value P₁ (630).

The controller 600 may obtain a magnitude of the output voltage provided from the power amplifier 300.

The controller 600 may perform a series of control operations by comparing the obtained magnitude of the output voltage with a magnitude of a first voltage value V₁, based on the magnitude of the supply power being greater than the preset first power value P₁. Specifically, the controller 600 may determine whether the magnitude of the output voltage is less than or equal to the first voltage value V₁ (640).

The controller 600 may detect a power value corresponding to the rectified input voltage, based on the magnitude of the output voltage being less than or equal to the first voltage value V₁. Here, the controller 600 may first identify whether a previously detected power value exists (651).

Based on identifying that the previously detected power value exists, the controller 600 may correct a waveform of the output voltage based on the detected power value (661).

Based on identifying that the previously detected power value does not exist, the controller 600 may detect the power value corresponding to the rectified input voltage (662). Thereafter, the controller 600 may correct the waveform of the output voltage based on the detected power value.

Meanwhile, the controller 600 may control the power amplifier 300 to apply the output voltage to the plurality of electrodes 500, based on the magnitude of the output voltage being greater than the first voltage value V₁ (652).

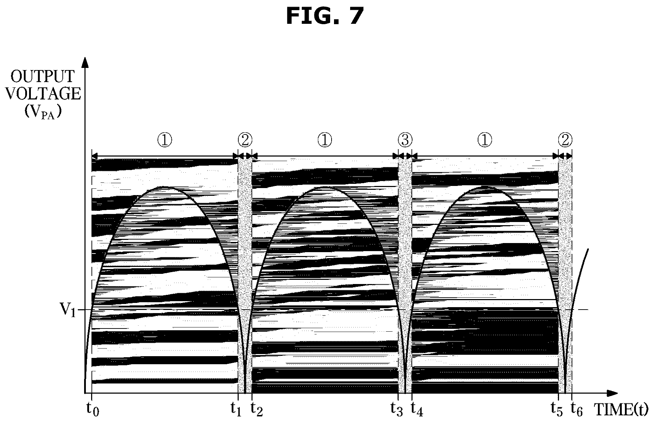

FIG. 7 is a graph illustrating a control method according to the output voltage provided from the power amplifier 300 of the dryer 1 according to an embodiment. In FIG. 7, the x-axis may represent time t, and the y-axis may represent the output voltage provided from the power amplifier 300. In FIG. 7, ① indicates a time period during which a power supply operation is performed, ② indicates a time period during which a power value is detected, and ③ indicates a time period during which impedance matching or output voltage correction is performed.

Referring to FIG. 5 to FIG. 7, in a case where the magnitude of the supply power is greater than the preset first power value P₁, the minimum voltage for performing the power supply operation may be determined as the first voltage value V₁, and thus the entire time period for supplying power may be used.

In FIG. 7, it may be confirmed that the output voltage in the time periods t0~t1, t2~t3, and t4~t5, represented by dark shading, is greater than the first voltage value V₁. Accordingly, in the time periods t0~tl, t2~t3, and t4~t5, the controller 600 may control the power amplifier 300 to apply the output voltage to the plurality of electrodes 500.

Similarly, in FIG. 7, it may be confirmed that the output voltage in the time periods t1~t2, t3~t4, and t5~t6, represented by light shading, is less than the first voltage value V₁. Accordingly, in the time periods t1~t2, t3~t4, and t5~t6, the controller 600 may detect a power value corresponding to the rectified input voltage, or may correct a waveform of the output voltage based on the detected power value. For example, as shown in FIG. 7, in the time periods t1~t2 and t5~t6, the power value may be detected, and in the time period t3~t4, the waveform of the output voltage may be corrected based on the detected power value.

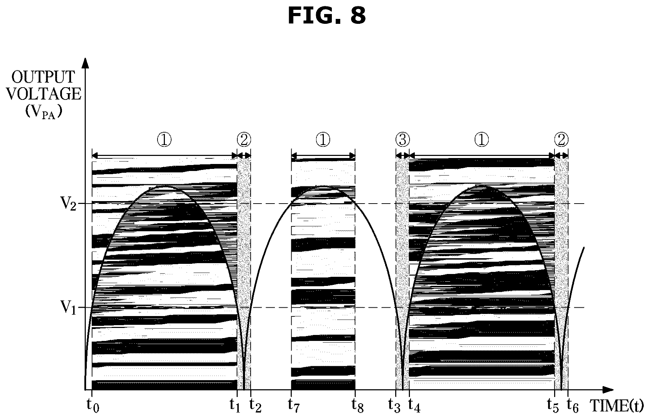

FIG. 8 is a graph illustrating a control method according to the output voltage provided from the power amplifier 300 of the dryer 1 according to an embodiment. In FIG. 8, the x-axis may represent time t, and the y-axis may represent the output voltage provided from the power amplifier 300. In FIG. 8, ① indicates a time period during which a power supply operation is performed, ② indicates a time period during which a power value is detected, and ③ indicates a time period during which impedance matching or output voltage correction is performed.

In the case where the entire power supply time period is used as shown in FIG. 7, zero-voltage switching may not be readily achieved as the voltage decreases. Accordingly, operation of low voltage requires to be reduced.

Thus, in a case where the magnitude of the supply power is greater than the preset first power value P₁, the controller 600 may control the power amplifier 300 to use only a part of the power supply time period in an arbitrary time period.

Referring to FIG. 8, unlike what is shown in FIG. 7, the controller 600 may determine the minimum voltage for performing the power supply operation as a second voltage value V₂ so that power is supplied only during the time period t7~t8, without supplying power during the entire time period t2~t3.

Accordingly, in a case where the magnitude of the supply power is greater than the preset first power value P₁, the controller 600 may control the power amplifier 300 to apply the output voltage to the plurality of electrodes 500, based on the magnitude of the output voltage being greater than the first voltage value V₁. However, in an arbitrary time period, the controller 600 may control the power amplifier 300 to apply the output voltage to the plurality of electrodes 500 based on the magnitude of the output voltage being greater than the second voltage value V₂.

In other words, in a case where the magnitude of the supply power is greater than the preset first power value P₁, the power to be supplied is large, and thus the controller 600 may basically determine the minimum voltage that serves as a reference for supplying power to be the first voltage value V₁ by applying the output voltage. However, in an arbitrary time period where a relatively low output voltage is applied to satisfy zero-voltage switching, the controller 600 may change the minimum voltage that serves as a reference for supplying power to the second voltage value V₂. For example, as shown in FIG. 8, the controller 600 may control the power amplifier 300 to alternately apply the output voltage to allow the minimum voltage that serves as a reference for supplying power to be the first voltage value V₁, and apply the output voltage to allow the minimum voltage that serves as a reference for supplying power to be the second voltage value V₂.

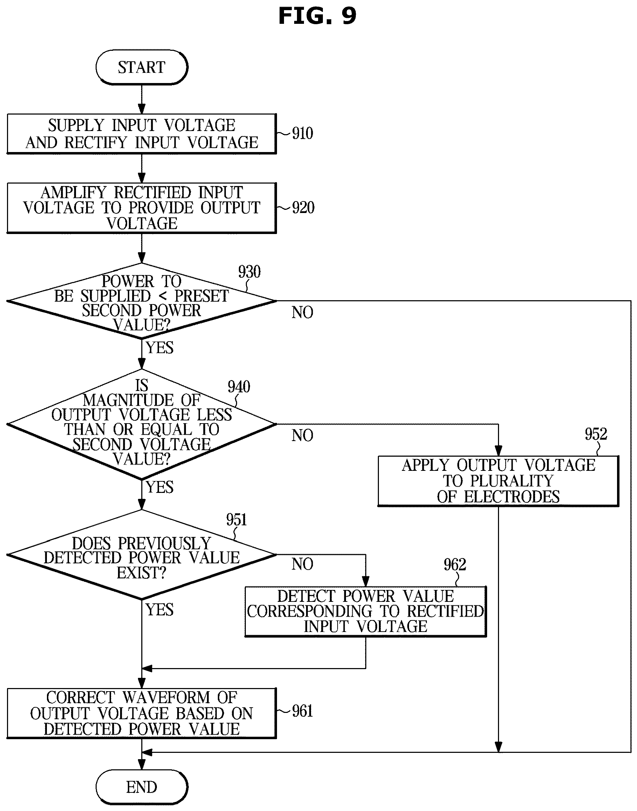

FIG. 9 is a flowchart illustrating a control method of the dryer 1 according to an embodiment.

Referring to FIG. 9, the controller 600 may control the AC power supply 100 to supply an input voltage. The input voltage supplied from the AC power supply 100 may be transmitted to the rectifier 200. The rectifier 200 may rectify the input voltage (910).

The rectified input voltage may be transmitted to the power amplifier 300. The controller 600 may control the power amplifier 300 to amplify the rectified input voltage to provide an output voltage (920).

The controller 600 may determine a minimum voltage for performing the power supply operation based on a magnitude of the supply power corresponding to the load. For example, the controller 600 may determine whether the magnitude of the supply power is less than a preset second power value P₂ (930).

The controller 600 may obtain a magnitude of the output voltage provided from the power amplifier 300.

The controller 600 may perform a series of control operations by comparing the obtained magnitude of the output voltage with a magnitude of a second voltage value V₂, based on the magnitude of the supply power being less than the preset second power value P₂. Specifically, the controller 600 may determine whether the magnitude of the output voltage is less than or equal to the second voltage value V₂ (940).

The controller 600 may detect a power value corresponding to the rectified input voltage based on the magnitude of the output voltage being less than or equal to the second voltage value V₂. Here, the controller 600 may first identify whether a previously detected power value exists (951).

Based on identifying that the previously detected power value exists, the controller 600 may correct a waveform of the output voltage based on the detected power value (961).

Based on identifying that the previously detected power value does not exist, the controller 600 may detect the power value corresponding to the rectified input voltage (962). Thereafter, the controller 600 may correct the waveform of the output voltage based on the detected power value.

Meanwhile, the controller 600 may control the power amplifier 300 to apply the output voltage to the plurality of electrodes 500, based on the magnitude of the output voltage being greater than the second voltage value V₂ (952).

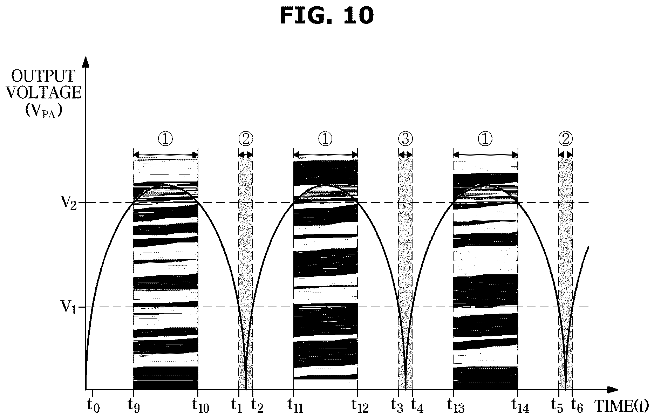

FIG. 10 is a graph illustrating a control method according to the output voltage provided from the power amplifier 300 of the dryer 1 according to an embodiment. In FIG. 10, the x-axis may represent time t, and the y-axis may represent the output voltage provided from the power amplifier 300. In FIG. 10, ① indicates a time period during which a power supply operation is performed, (2) indicates a time period during which a power value is detected, and ③ indicates a time period during which impedance matching or output voltage correction is performed.

As described above, in the case of low power where the magnitude of the supply power is small, the desired power may be supplied without using even low output-voltage regions. Accordingly, the controller 600 may control the power amplifier 300 to supply power only in a region where the output voltage is higher than a defined level, without supplying power in a low output-voltage region where zero-voltage switching is not readily achieved.

Referring to FIG. 10, it may be confirmed that the output voltage in the time periods t9~t10, t11~t12, and t13~t14, represented by dark shading, is greater than the second voltage value V₂. Accordingly, the controller 600 may control the power amplifier 300 to apply the output voltage to the plurality of electrodes 500 in the time periods t9~t10, t11~t12, and t13~t14.

Similarly, in FIG. 10, it may be confirmed that the output voltage in the time periods t1~t2, t3~t4, and t5~t6, represented by light shading, is less than the first voltage value V₁. Accordingly, in the time periods t1~t2, t3~t4, and t5~t6, the controller 600 may detect a power value corresponding to the rectified input voltage, or may correct a waveform of the output voltage based on the detected power value. For example, as shown in FIG. 10, in the time periods t1~t2 and t5~t6, the power value may be detected, and in t3~t4, the waveform of the output voltage may be corrected based on the detected power value.

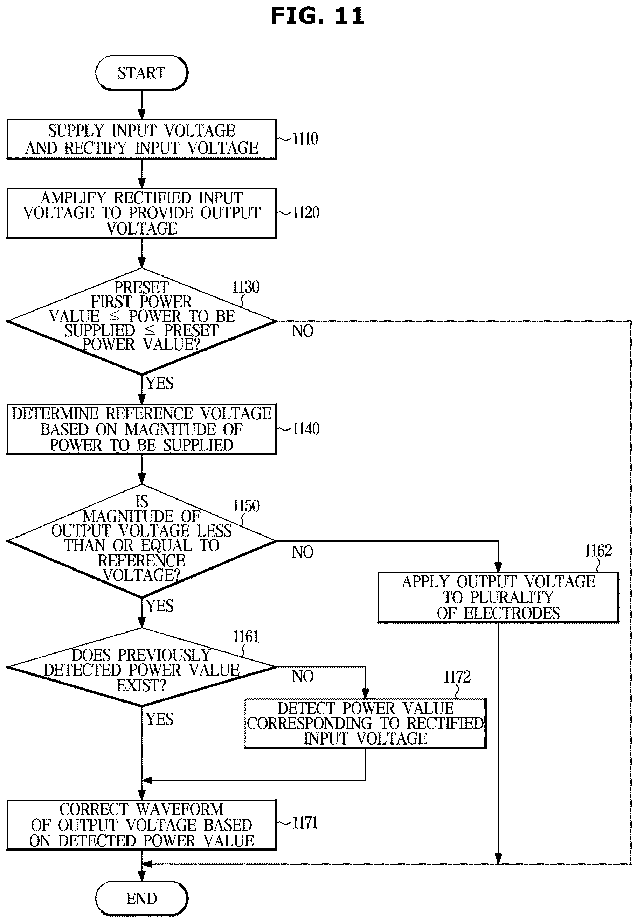

FIG. 11 is a flowchart illustrating a control method of the dryer 1 according to an embodiment.

Referring to FIG. 11, the controller 600 may control the AC power supply 100 to supply an input voltage. The input voltage supplied from the AC power supply 100 may be transmitted to the rectifier 200. The rectifier 200 may rectify the input voltage (1110).

The rectified input voltage may be transmitted to the power amplifier 300. The controller 600 may control the power amplifier 300 to amplify the rectified input voltage to provide an output voltage (1120).

The controller 600 may determine a minimum voltage for performing the power supply operation based on a magnitude of the supply power corresponding to the load. For example, the controller 600 may determine whether the magnitude of the supply power is greater than or equal to a preset second power value P₂ and less than or equal to a preset first power value P₁ (1130).

The controller 600 may obtain a magnitude of the output voltage provided from the power amplifier 300.

Here, a third voltage value may be determined based on the magnitude of the supply power (1140). Here, the third voltage value may be included in the range of greater than or equal to a first voltage value V₁ and less than or equal to a second voltage value V₂.

The controller 600 may perform a series of control operations by comparing the obtained magnitude of the output voltage with a magnitude of the third voltage value, based on the magnitude of the supply power being greater than or equal to the preset second power value P₂ and less than or equal to the preset first power value P₁. Specifically, the controller 600 may determine whether the magnitude of the output voltage is less than or equal to the third voltage value (1150).

The controller 600 may detect a power value corresponding to the rectified input voltage, based on the magnitude of the output voltage being less than or equal to the third voltage value. Here, the controller 600 may first identify whether a previously detected power value exists (1161).

Based on identifying that the previously detected power value exists, the controller 600 may correct a waveform of the output voltage based on the detected power value (1171).

Based on identifying that the previously detected power value does not exist, the controller 600 may detect the power value corresponding to the rectified input voltage (1172). Thereafter, the controller 600 may correct the waveform of the output voltage based on the detected power value.

Meanwhile, the controller 600 may control the power amplifier 300 to apply the output voltage to the plurality of electrodes 500, based on the magnitude of the output voltage being greater than the third voltage value (1162).

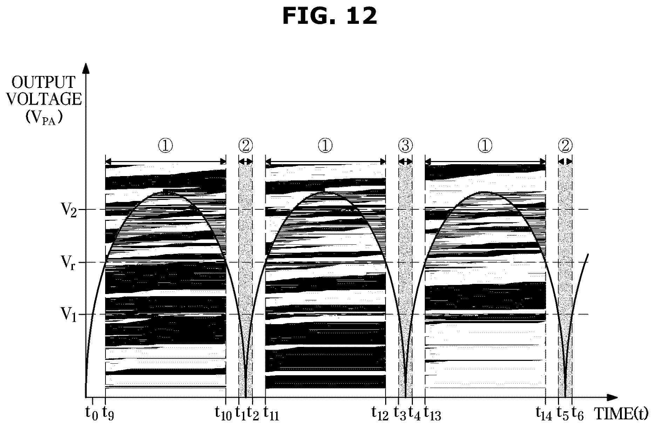

FIG. 12 is a graph illustrating a control method according to the output voltage provided from the power amplifier 300 of the dryer 1 according to an embodiment. In FIG. 12, the x-axis may represent time t, and the y-axis may represent the output voltage provided from the power amplifier 300. In FIG. 12, ① indicates a time period during which a power supply operation is performed, (2) indicates a time period during which a power value is detected, and ③ indicates a time period during which impedance matching or output voltage correction is performed.

In the case of intermediate power, which is neither high power where the magnitude of the supply power is greater than the preset first power value P₁, nor low power where the magnitude of the supply power is less than the preset second power value P₂, the controller 600 may flexibly determine a minimum voltage for performing the power supply operation between the first voltage value V₁ and the second voltage value V₂. By controlling as described above, the power supply time period may be optimized according to the magnitude of the supply power.

Referring to FIG. 12, it may be confirmed that the output voltage in the time periods t9~t10, t11~t12, and t13~t14, represented by dark shading, is greater than a third voltage value V3. Accordingly, the controller 600 may control the power amplifier 300 to apply the output voltage to the plurality of electrodes 500 in the time periods t9~t10, t11~t12, and t13~t14. Looking at the size (duration) of the time periods represented by dark shading in FIG. 12, it may be confirmed that the size of the time periods represented by dark shading in FIG. 12 is smaller than the time periods represented by dark shading in FIG. 7 and larger than the time periods represented by dark shading in FIG. 10.

Similarly, in FIG. 12, it may be confirmed that the output voltage in the time periods t1~t2, t3~t4, and t5~t6, represented by light shading, is less than the first voltage value V₁. Accordingly, in the time periods t1~t2, t3~t4, and t5~t6, the controller 600 may detect a power value corresponding to the rectified input voltage, or may correct a waveform of the output voltage based on the detected power value. For example, as shown in FIG. 10, in the time periods t1~t2 and t5~t6, the power value may be detected, and in t3~t4, the waveform of the output voltage may be corrected based on the detected power value.

The method for determining a power supply time period and a power value detection or impedance matching time period according to the magnitude of the output voltage, and the method for determining an optimal power supply time period according to the magnitude of the supply power have been described.

Hereinafter, a method for optimizing the operation time for power supply, power value detection, and impedance matching will be described.

When applying the output voltage to the plurality of electrodes 500 according to the series of control methods described above, the duration of the power supply time period requires to be set appropriately for the magnitude of the supply power, because in a case where the duration of the power supply time period is excessively short compared to the magnitude of the supply power, power may not be supplied properly, leading to reduced efficiency; and in a case where the duration of the power supply time period is excessively long compared to the magnitude of the supply power, the operation time for power value detection or impedance matching may be insufficient, leading to improper functioning.

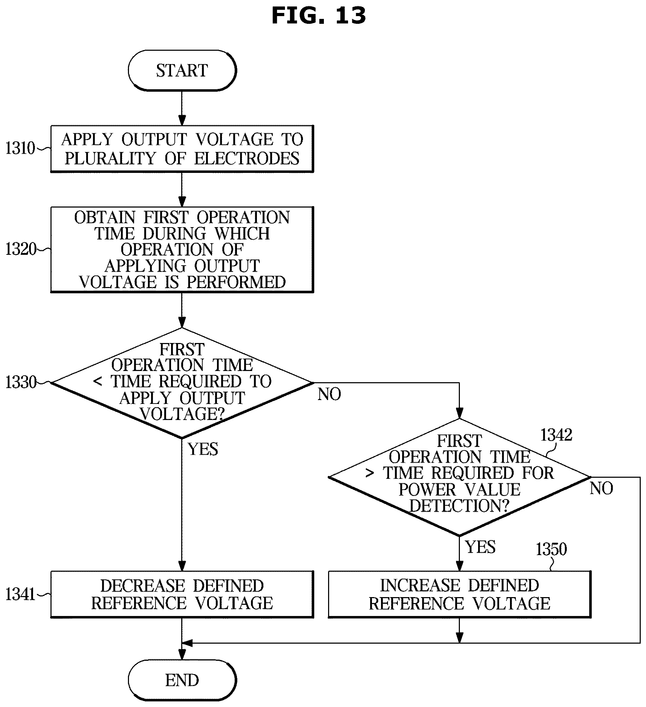

FIG. 13 is a flowchart illustrating a control method of the dryer 1 according to an embodiment.

Referring to FIG. 13, the controller 600 may control the power amplifier 300 to apply an output voltage to the plurality of electrodes 500 (1310). Here, controlling the power amplifier 300 may include controlling the power amplifier 300 according to the series of control methods described with reference to FIG. 1 to FIG. 12.

The controller 600 may obtain a first operation time during which an operation of applying the output voltage is performed (1320).

The controller 600 may determine whether the obtained first operation time was sufficient. That is, the controller 600 may determine whether power, as much as a magnitude of the supply power, was properly supplied. In addition, the controller 600 may calculate a time required to apply the output voltage corresponding to the magnitude of the supply power.

In other words, the controller 600 may compare the obtained first operation time with the time required to apply the output voltage corresponding to the magnitude of the supply power. Specifically, the controller 600 may determine whether the obtained first operation time is shorter than the time required to apply the output voltage corresponding to the magnitude of the supply power (1330).

In a case where the obtained first operation time is shorter than the time required to apply the output voltage corresponding to the magnitude of the supply power, the controller 600 may decrease a defined reference voltage Vᵣ (1341). When the defined reference voltage Vᵣ is decreased, the first operation time increases, and thus the duration of the power supply time period may be adjusted to be suitable for the magnitude of the supply power. Here, the defined reference voltage Vᵣ may refer to a voltage that serves as a reference for dividing the power supply time period and a power value detection or impedance matching time period.

The controller 600 may determine a magnitude by which the defined reference voltage Vᵣ is decreased, based on a difference between the first operation time and the time required to apply the output voltage corresponding to the magnitude of the supply power. The greater the difference between the first operation time and the time required to apply the output voltage corresponding to the magnitude of the supply power, the greater the magnitude by which the defined reference voltage Vᵣ is decreased.

The controller 600 may determine whether the obtained first operation time is greater than the time required to apply the output voltage corresponding to the magnitude of the supply power (1342). In a case where the obtained first operation time is greater than the time required to apply the output voltage corresponding to the magnitude of the supply power, the controller 600 may increase the defined reference voltage Vᵣ (1350). When the defined reference voltage Vᵣ is increased, the first operation time decreases, and thus the duration of the power supply time period may be adjusted to be suitable for the magnitude of the supply power.

The controller 600 may determine a magnitude by which the defined reference voltage Vᵣ is increased, based on the difference between the first operation time and the time required to apply the output voltage corresponding to the magnitude of the supply power. The greater the difference between the first operation time and the time required to apply the output voltage corresponding to the magnitude of the supply power, the greater the magnitude by which the defined reference voltage Vᵣ is increased.

When detecting the power value corresponding to the rectified input voltage according to the series of control methods described above, the duration of the power value detection time period requires to be set to sufficiently perform power value detection.

This is because, in a case where the duration of the power value detection time period is excessively short compared to the time required for power value detection, power value detection may not be performed properly, and thus impedance matching may not be performed properly; and in a case where the duration of the power value detection time period is excessively long compared to the time required for power value detection, the operation time for power supply may be insufficient, leading to reduced power efficiency.

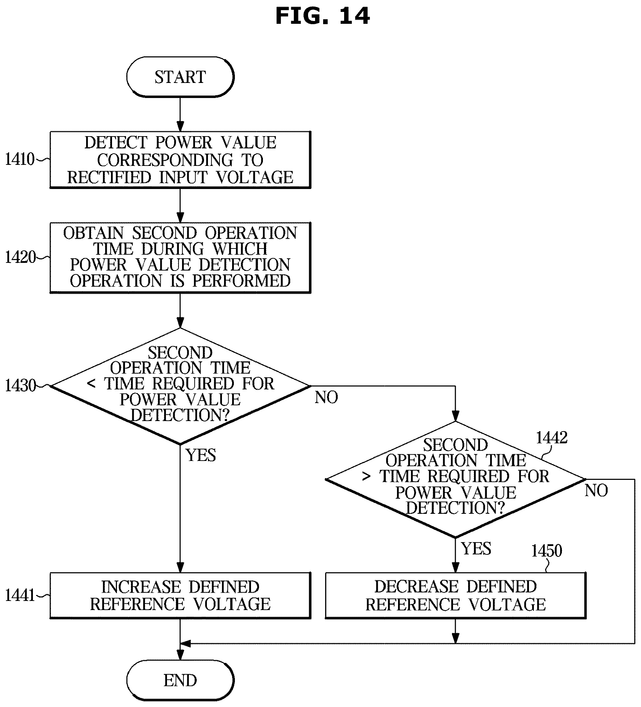

FIG. 14 is a flowchart illustrating a control method of the dryer 1 according to an embodiment.

Referring to FIG. 14, the controller 600 may detect a power value corresponding to a rectified input voltage (1410). Here, the controller 600 may detect the power value according to the series of control methods described with reference to FIG. 1 to FIG. 12.

The controller 600 may obtain a second operation time during which the power value detection operation is performed (1420).

The controller 600 may determine whether the obtained second operation time was sufficient. That is, the controller 600 may determine whether power value detection was performed properly. In addition, the controller 600 may calculate a time required for power value detection.

In other words, the controller 600 may compare the obtained second operation time with the time required for power value detection. Specifically, the controller 600 may determine whether the obtained second operation time is shorter than the time required for power value detection (1430).

In a case where the obtained second operation time is shorter than the time required for power value detection, the controller 600 may increase a defined reference voltage Vᵣ (1441). When the defined reference voltage Vᵣ is increased, the second operation time increases, and thus the duration of the time period required for power value detection may be adjusted to properly perform power value detection.

The controller 600 may determine a magnitude by which the defined reference voltage Vᵣ is increased, based on a difference between the second operation time and the time required for power value detection. The greater the difference between the second operation time and the time required for power value detection, the greater the magnitude by which the defined reference voltage Vᵣ is increased.

The controller 600 may determine whether the obtained second operation time is greater than the time required for power value detection (1442). In a case where the obtained second operation time is greater than the time required for power value detection, the controller 600 may decrease the defined reference voltage Vᵣ (1450). When the defined reference voltage Vᵣ is decreased, the second operation time decreases, and thus the power value detection time period may be adjusted so that the power value detection is performed only during the time required for power value detection.

The controller 600 may determine a magnitude by which the defined reference voltage Vᵣ is decreased, based on the difference between the second operation time and the time required for power value detection. The greater the difference between the second operation time and the time required for power value detection, the greater the magnitude by which the defined reference voltage Vᵣ is decreased.

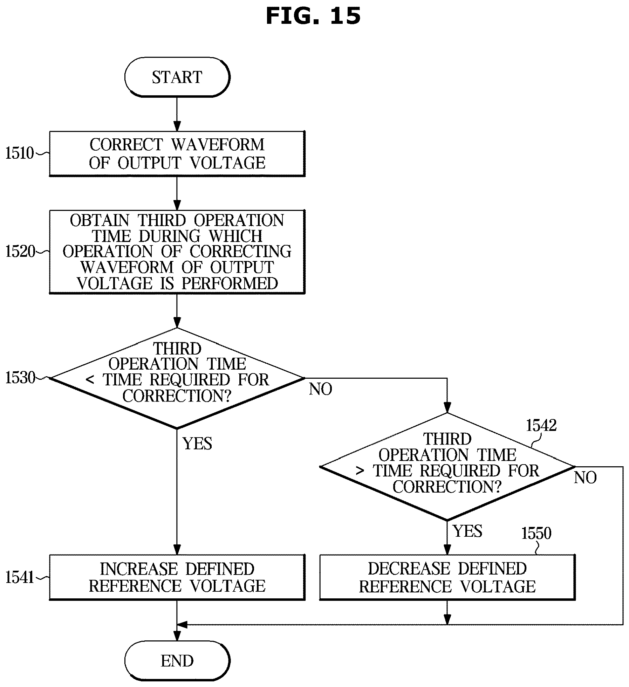

FIG. 15 is a flowchart illustrating a control method of the dryer 1 according to an embodiment.

In a case where impedance matching for correcting a waveform of an output voltage is performed according to the series of control methods described above, the duration of the output voltage waveform correction requires to be set so that the waveform correction may be sufficiently performed.

This is because, in a case where the duration of the output voltage waveform correction is excessively short compared to a time required for waveform correction, impedance matching may not be performed properly, leading to a failure to supply optimal power and reduced efficiency; and in a case where the duration of the waveform correction is excessively long compared to the time required for power value detection, the operation time for power supply may be insufficient, leading to reduced power efficiency.

Referring to FIG. 15, the controller 600 may control the matching circuit 400 to correct a waveform of an output voltage (1510). Here, the controller 600 may correct the waveform of the output voltage according to the series of control methods described with reference to FIG. 1 to FIG. 12.

The controller 600 may obtain a third operation time during which the operation of correcting the waveform of the output voltage is performed (1520).

The controller 600 may determine whether the obtained third operation time was sufficient. That is, the controller 600 may determine whether impedance matching was performed properly. In addition, the controller 600 may calculate a time required for correcting the waveform of the output voltage.

In other words, the controller 600 may compare the obtained third operation time with the time required for correcting the waveform of the output voltage. Specifically, the controller 600 may determine whether the obtained third operation time is shorter than the time required for correcting the waveform of the output voltage (1530).

In a case where the obtained third operation time is shorter than the time required for correcting the waveform of the output voltage, the controller 600 may increase a defined reference voltage Vᵣ (1541). When the defined reference voltage Vᵣ is increased, the third operation time increases, and thus the duration of the time required for correcting the waveform of the output voltage may be adjusted so that impedance matching may be performed properly.

The controller 600 may determine a magnitude by which the defined reference voltage Vᵣ is increased, based on a difference between the third operation time and the time required for correcting the waveform of the output voltage. The greater the difference between the third operation time and the time required for correcting the waveform of the output voltage, the greater the magnitude by which the defined reference voltage Vᵣ is increased.

The controller 600 may determine whether the obtained third operation time is greater than the time required for correcting the waveform of the output voltage (1542). In a case where the obtained third operation time is greater than the time required for correcting the waveform of the output voltage, the controller 600 may decrease the defined reference voltage Vᵣ (1550). When the defined reference voltage Vᵣ is decreased, the third operation time decreases, and thus the time for output voltage waveform correction may be adjusted so that the impedance matching is performed only during the time required for correcting the waveform of the output voltage.

The controller 600 may determine a magnitude by which the defined reference voltage Vᵣ is decreased, based on the difference between the third operation time and the time required for correcting the waveform of the output voltage. The greater the difference between the third operation time and the time required for correcting the waveform of the output voltage, the greater the magnitude by which the defined reference voltage Vᵣ is decreased.

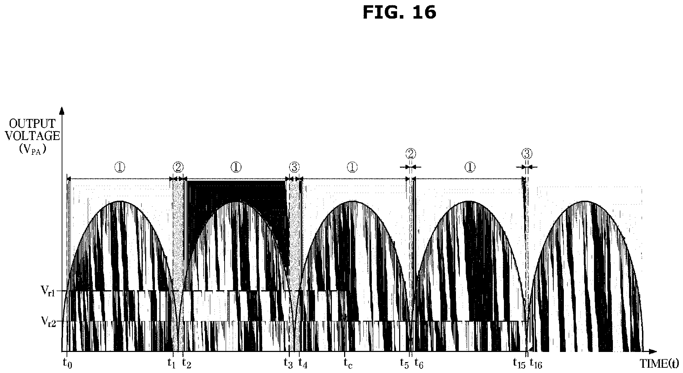

FIG. 16 is a graph illustrating a control method according to the output voltage provided from the power amplifier 300 of the dryer 1 according to an embodiment.

In FIG. 16, the x-axis may represent time t, and the y-axis may represent the output voltage provided from the power amplifier 300. In FIG. 16, ① indicates a time period during which a power supply operation is performed, ② indicates a time period during which a power value is detected, and ③ indicates a time period during which impedance matching or output voltage correction is performed.

FIG. 16 shows timing control for increasing or decreasing a defined reference voltage Vᵣ to optimize the operation times of power supply, power value detection, and impedance matching, which have been described with reference to FIG. 13 to FIG. 15.

Referring to FIG. 16, the controller 600 may perform a series of control operations based on a defined first reference voltage Vᵣ₁ and a magnitude of an output voltage in the time period t0~t4.

Specifically, the controller 600 may apply the output voltage to the plurality of electrodes 500 to supply power, based on the magnitude of the output voltage being greater than the defined first reference voltage Vᵣ₁. In addition, the controller 600 may detect a power value or correct a waveform of the output voltage, based on the magnitude of the output voltage being less than or equal to the defined first reference voltage Vᵣ₁.

For example, in the time periods t0~t1 and t2~t3 of FIG. 16, power supply may be performed, in the time period t1~t2, power value detection may be performed, and in the time period t3~t4, impedance matching may be performed.

However, in a case where because the first operation time during which the operation of applying the output voltage is performed is not appropriate as described in FIG. 13, the power supply timing is not optimized, or in a case where because the second operation time during which the power value detection operation is performed is not appropriate as described in FIG. 14, the power value detection timing is not optimized, or in a case where because the third operation time during which the waveform correction of the output voltage is performed is not appropriate as described in FIG. 15, the impedance matching timing is not optimized, the timing at which each operation is performed requires to be adjusted, which is referred to as 'timing control' below.

Accordingly, the controller 600 may adjust the first operation time, the second operation time, or the third operation time appropriately by increasing or decreasing the defined first reference voltage Vᵣ₁ at a timing control point t_{c} in FIG. 16.

In a case where the first operation time is insufficient, or the second operation time or the third operation time is excessive, the controller 600 may decrease the defined first reference voltage Vᵣ₁ to a defined second reference voltage Vᵣ₂, as shown in FIG. 16.

Conversely, in a case where the first operation time is excessive, or the second operation time or the third operation time is insufficient, the controller 600 may increase the defined first reference voltage Vᵣ₁ to the defined second reference voltage Vᵣ₂, unlike what is shown in FIG. 16.

The timing control described with reference to FIG. 13 to FIG. 16 does not need to be performed in real time or every time. Accordingly, the controller 600 may perform the above-described timing control in an arbitrary time period.

In addition, the controller 600 may pre-determine a cycle for performing timing control. The controller 600 may increase or decrease the defined reference voltage Vᵣ based on the predetermined timing control cycle.

Accordingly, the time during which power supply, power value detection, and impedance matching are performed may be optimized.

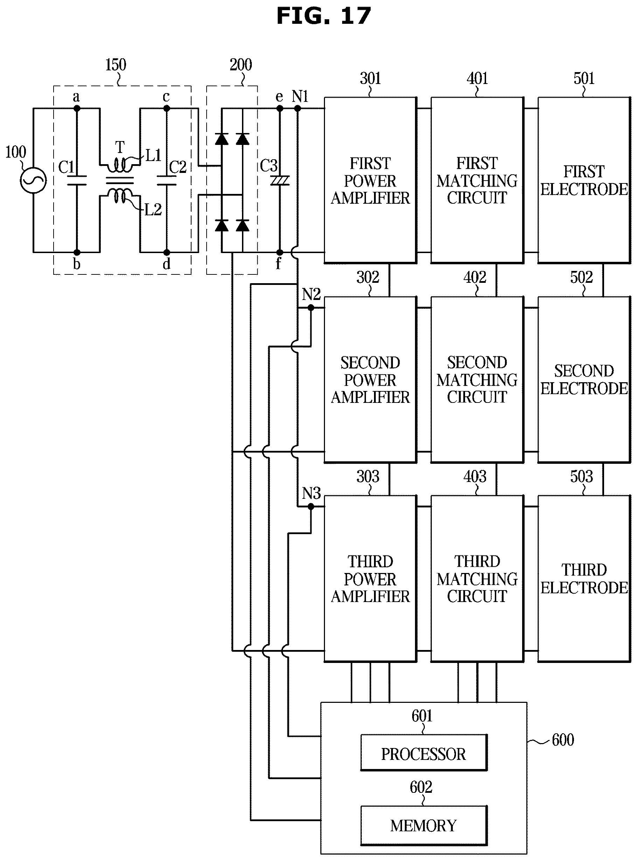

FIG. 17 illustrates a circuit structure of the dryer 1 according to an embodiment.

The circuit of the dryer 1 according to the disclosure may be operated in a three-phase configuration. Here, the three phases may include a U-phase, a V-phase, and a W-phase. In the case of three-phase operation, three circuits may operate in parallel for the respective phases. The circuit of the dryer 1 according to the disclosure may include a structure capable of integrating and controlling the three circuits. In this case, efficiency and design convenience may be greatly increased.

Referring to FIG. 17, the dryer 1 according to the disclosure may include the AC power supply 100, the EMI filter 150, the rectifier 200, a plurality of power amplifiers 300, a plurality of electrodes 500, a plurality of matching circuits 400, and the controller 600 that controls each of the aforementioned components.

The AC power supply 100 may supply an alternating current input voltage. The input voltage supplied from the AC power supply 100 may be 220V, and may be transmitted to the EMI filter 150. Both ends of the AC power supply 100 may be connected to a node a and a node b, respectively. The input voltage may include a U-phase input voltage, a V-phase input voltage, and a W-phase input voltage in three phases.

The EMI filter 150 may remove noise included in the supplied input voltage. The EMI filter 150 may include a first capacitor C1, a transformer T, a second capacitor C2, a node a, a node b, a node c, and a node d.

The first capacitor C1 may be connected in parallel with the AC power supply 100 between the node a and the node b.

The transformer T may include a first winding L1 and a second winding L2. The first winding L1 and the second winding L2 may be wound in the same direction. The first winding L1 may be connected between the node a and the node c. The second winding L2 may be connected between the node b and the node d. That is, the transformer T may be connected in parallel between the first capacitor C1 and the second capacitor C2.

The second capacitor C2 may be connected in parallel with the transformer T between the node c and the node d.

The rectifier 200 is a type of circuit element or device for converting alternating current to direct current. The rectifier 200 may be classified into a half-wave rectifier and a full-wave rectifier. The half-wave rectifier may output only the positive section of the signal, and the full-wave rectifier may output the negative section of the signal as a positive section. Accordingly, using the full-wave rectifier may double the frequency, and may provide an average output voltage twice that of the half-wave rectifier 200, thereby improving the utilization rate of the power source. To this end, as shown in FIG. 1, the rectifier 200 in the circuit of the dryer 1 according to the disclosure may include a full-wave rectifier.

The rectifier 200 may include two or more diodes. For example, the rectifier 200 may include four diodes. Specifically, the rectifier 200 may be provided in a form in which two half-wave rectifiers, each having two diodes connected in series, are connected in parallel.

The input voltage passing through the EMI filter 150 and the rectifier 200 may have a pulsating current waveform. For example, in a case where the input voltage supplied from the AC voltage has a waveform with a frequency of 60Hz, the input voltage rectified through the EMI filter 150 and the rectifier 200 may have a pulsating current waveform with a frequency of 120Hz.

Meanwhile, the dryer 1 according to the disclosure may further include a third capacitor C3, a node e connected to one end of the rectifier 200, and a node f connected to the other end of the rectifier 200. The third capacitor C3 may be connected in parallel with the rectifier 200 between the node e and the node f.

The plurality of power amplifiers 300 may be connected in parallel with the rectifier 200 through the node e. The plurality of power amplifiers 300 may receive the rectified input voltage from the rectifier 200.

The plurality of power amplifiers 300 may include a first power amplifier 301 that amplifies the U-phase input voltage to provide a U-phase output voltage, a second power amplifier 302 that amplifies the W-phase input voltage to provide a V-phase output voltage, and a third power amplifier 303 that amplifies the V-phase input voltage to provide a W-phase output voltage.

The plurality of electrodes 500 may include a first electrode 501 to which the U-phase output voltage is applied, a second electrode 502 to which the V-phase output voltage is applied, and a third electrode 503 to which the W-phase output voltage is applied.

The plurality of matching circuits 400 may include a first matching circuit 401 connected between the first power amplifier 301 and the first electrode 501 and correcting a waveform of the U-phase output voltage provided from the first power amplifier 301, a second matching circuit 402 connected between the second power amplifier 302 and the second electrode 502 and correcting a waveform of the V-phase output voltage provided from the second power amplifier 302, and a third matching circuit 403 connected between the third power amplifier 303 and the third electrode 503 and correcting waveform of the W-phase output voltage provided from the third power amplifier 303.

The controller 600 may be connected to a first node N1 provided between the node e and the first power amplifier 301, a second node N2 provided between the first node N1 and the second power amplifier 302, and a third node N3 provided between the first node N1 and the third power amplifier 303. Accordingly, the controller 600 may detect a power value corresponding to the rectified U-phase input voltage, a power value corresponding to the rectified V-phase input voltage, and a power value corresponding to the rectified W-phase input voltage.

The controller 600 may select one of the U-phase input voltage, the V-phase input voltage, or the W-phase input voltage, which may include determining which input voltage among the three phases to use as a basis for detecting the power value.

In a case where the U-phase input voltage is selected, the controller 600 may detect the power value corresponding to the rectified U-phase input voltage, based on a magnitude of the U-phase output voltage being less than or equal to a defined reference voltage Vᵣ.

In addition, in a case where the V-phase input voltage is selected, the controller 600 may detect the power value corresponding to the rectified V-phase input voltage, based on the magnitude of the V-phase output voltage being less than or equal to the defined reference voltage Vᵣ.

In addition, in a case where the W-phase input voltage is selected, the controller 600 may detect the power value corresponding to the rectified W-phase input voltage, based on the magnitude of the W-phase output voltage being less than or equal to the defined reference voltage Vᵣ.

The controller 600 may select one of the U-phase output voltage, the V-phase output voltage, or the W-phase output voltage, which may include determining which output voltage among the three phases to use as a basis for detecting the power value or correcting the waveform of the output voltage.

In a case where the U-phase output voltage is selected, the controller 600 may control the U-phase matching circuit 400 to correct the waveform of the amplified U-phase output voltage using the power value corresponding to the rectified U-phase input voltage, based on the magnitude of the U-phase output voltage being less than or equal to the defined reference voltage Vᵣ.

In addition, in a case where the V-phase output voltage is selected, the controller 600 may control the V-phase matching circuit 400 to correct the waveform of the amplified V-phase output voltage using the power value corresponding to the rectified V-phase input voltage, based on the magnitude of the V-phase output voltage being less than or equal to the defined reference voltage Vᵣ.

In addition, in a case where the W-phase output voltage is selected, the controller 600 may control the W-phase matching circuit 400 to correct the waveform of the amplified W-phase output voltage using the power value corresponding to the rectified W-phase input voltage, based on the magnitude of the W-phase output voltage being less than or equal to the defined reference voltage Vᵣ.

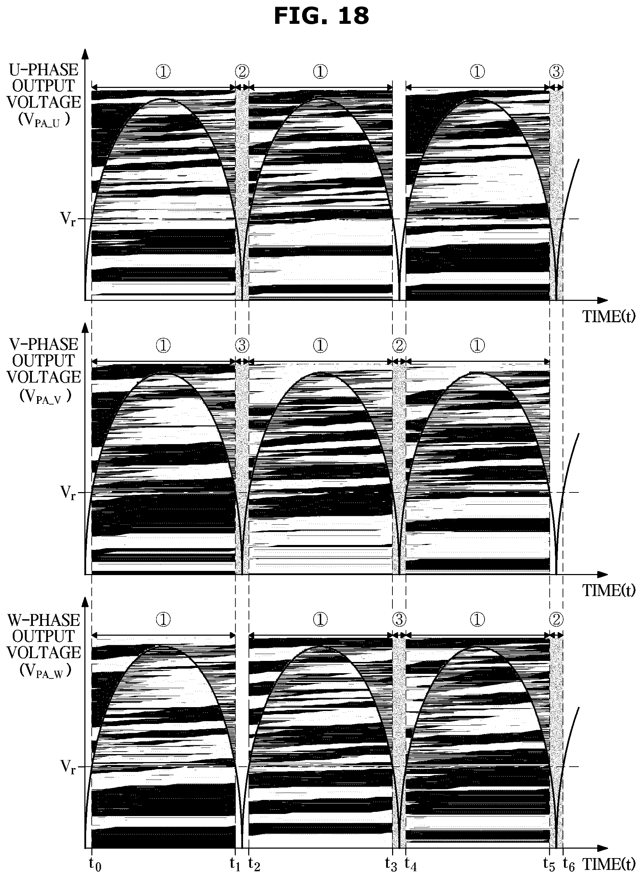

FIG. 18 is a graph illustrating a control method according to the three-phase output voltage provided from the plurality of power amplifiers 300 of the dryer 1 according to an embodiment.

In FIG. 18, the x-axis may represent time t, and the y-axis may represent each of the three-phase output voltages provided from each of the plurality of power amplifiers 300. In FIG. 18, ① indicates a time period during which a power supply operation is performed, (2) indicates a time period during which a power value is detected, and ③ indicates a time period during which impedance matching or output voltage correction is performed.

Referring to FIG. 18, it may be confirmed that each of the three-phase output voltages in the time periods t0~t1, t2~t3, and t4~t5, represented by dark shading, is greater than a reference voltage Vᵣ. Accordingly, in the time periods t0~t1, t2~t3, and t4~t5, the controller 600 may control the power amplifier 300 to apply each of the three-phase output voltages to the plurality of electrodes 500.

In FIG. 18, it may be confirmed that each of the three-phase output voltages in the time periods t1~t2, t3~t4, and t5~t6, represented by light shading, is less than the reference voltage Vᵣ. Accordingly, in the time periods t1~t2, t3~t4, and t5~t6, the controller 600 may detect a power value corresponding to each of the rectified three-phase input voltages, or may correct a waveform of each of the three-phase output voltages based on the detected power value.

The controller 600 may perform power value detection and impedance matching operations in real time or frequently in short cycles for all three-phase circuits. However, the power value detection and impedance matching operations may also be performed in long cycles, and thus the controller 600 does not need to perform the power value detection and impedance matching operations in real time or every time for all three-phase circuits. This is because performing the power value detection and impedance matching operations in real time or every time for all three-phase circuits may be an inefficient control method.

Accordingly, the controller 600 may pre-determine a cycle for performing power value detection in each of the three-phase circuits. In addition, the controller 600 may pre-determine a cycle for performing impedance matching in each of the three-phase circuits.

For example, as shown in FIG. 18, in the time period t1~t2, the controller 600 may detect the power value corresponding to the U-phase input voltage and correct the waveform of the V-phase output voltage. In addition, in the time period t3~t4, the controller 600 may detect the power value corresponding to the V-phase input voltage and correct the waveform of the W-phase output voltage. In addition, in the time period t5~t6, the controller 600 may detect the power value corresponding to the W-phase input voltage and correct the waveform of the V-phase output voltage.

The method of controlling the three-phase circuit is not limited to what is shown in FIG. 18, and the controller 600 may perform a series of control operations based on each of the three-phase output voltages by pre-determining an arbitrary cycle or arbitrary interval.

According to an embodiment of the disclosure, a dryer 1 may include: an alternating current (AC) power supply 100 configured to supply an input voltage; a rectifier 200 configured to rectify the supplied input voltage; a power amplifier 300 configured to amplify the rectified input voltage to provide an output voltage; a plurality of electrodes 500 to which the output voltage is applied; a matching circuit 400 connected between the power amplifier 300 and the plurality of electrodes 500 and configured to correct a waveform of the output voltage provided from the power amplifier 300; and at least one processor 601 configured to detect a power value corresponding to the rectified input voltage and obtain a magnitude of the output voltage provided from the power amplifier 300, wherein the at least one processor 601 may be configured to detect the power value corresponding to the rectified input voltage, based on the magnitude of the output voltage provided from the power amplifier 300 being less than or equal to a defined reference voltage Vr.

The at least one processor 601 may be configured to control the power amplifier 300 to apply the output voltage to the plurality of electrodes 500, based on the magnitude of the output voltage provided from the power amplifier 300 being greater than the defined reference voltage Vr.

The at least one processor 601 may be configured to control the matching circuit 400 to correct the waveform of the output voltage based on the detected power value.

The at least one processor 601 may be configured to control the power amplifier 300 to apply the output voltage to the plurality of electrodes 500, based on the magnitude of the output voltage being greater than a first voltage value V1, in response to a magnitude of supply power being greater than a preset first power value P1.

The at least one processor 601 may be configured to, in response to the magnitude of the supply power being greater than the preset first power value P1, control the power amplifier 300 to apply the output voltage to the plurality of electrodes 500, based on the magnitude of the output voltage being greater than the first voltage value V1, and control the power amplifier 300 to apply the output voltage to the plurality of electrodes 500, based on the magnitude of the output voltage being greater than a second voltage value V2 in an arbitrary time period, and the second voltage value V2 may be greater than the first voltage value V1.

The at least one processor 601 may be configured to in response to a magnitude of supply power being less than a preset second power value P2, control the power amplifier 300 to apply the output voltage to the plurality of electrodes 500, based on the magnitude of the output voltage being greater than a second voltage value V2, and the preset second power value P2 may be less than a preset first power value P1.

The at least one processor 601 may be configured to determine a third voltage value that is greater than or equal to a first voltage value V1 and less than or equal to a second voltage value V2, based on a magnitude of supply power, in response to the magnitude of the supply power being less than or equal to a preset first power value P1 and greater than or equal to a preset second power value P2; and control the power amplifier 300 to apply the output voltage to the plurality of electrodes 500, based on the magnitude of the output voltage being greater than or equal to the determined third voltage value, and the preset second power value P2 may be less than the preset first power value P1, and the second voltage value V2 may be greater than the first voltage value V1.

The at least one processor 601 may be configured to identify whether a previously detected power value exists based on the magnitude of the output voltage being less than or equal to the defined reference voltage Vr; in response to identifying that the previously detected power value exists, control the matching circuit 400 to correct the waveform of the output voltage based on the previously detected power value; and in response to identifying that the previously detected power value does not exist, detect the power value corresponding to the rectified input voltage.

The at least one processor 601 may be configured to, in response to identifying that the previously detected power value does not exist, detect the power value corresponding to the rectified input voltage.

The at least one processor 601 may be configured to obtain a first operation time during which the output voltage is applied.

The at least one processor 601 may be configured to decrease the defined reference voltage Vr, based on the obtained first operation time being less than a time required to apply an output voltage corresponding to a magnitude of supply power; and increase the defined reference voltage Vr, based on the obtained first operation time exceeding the time required to apply the output voltage corresponding to the magnitude of the supply power.

The at least one processor 601 may be configured to determine a magnitude by which the defined reference voltage Vr is increased or decreased, based on a difference between the obtained first operation time and the time required to apply the output voltage corresponding to the magnitude of the supply power.

The at least one processor 601 may be configured to obtain a second operation time during which the power value is detected.

The at least one processor 601 may be configured to increase the defined reference voltage Vr, based on the obtained second operation time being less than a time required to detect the power value; and decrease the defined reference voltage Vr, based on the obtained second operation time exceeding the time required to detect the power value.

The at least one processor 601 may be configured to determine a magnitude by which the defined reference voltage Vr is increased or decreased, based on a difference between the obtained second operation time and the time required to detect the power value.

The at least one processor 601 may be configured to obtain a third operation time during which the waveform of the output voltage is corrected.

The at least one processor 601 may be configured to increase the defined reference voltage Vr, based on the obtained third operation time being less than a time required to correct the waveform of the output voltage; and decrease the defined reference voltage Vr, based on the obtained third operation time exceeding the time required to correct the waveform of the output voltage.

The at least one processor 601 may be configured to determine a magnitude by which the defined reference voltage Vr is increased or decreased, based on a difference between the obtained third operation time and the time required to correct the waveform of the output voltage.

The input voltage may include a U-phase input voltage, a V-phase input voltage, and a W-phase input voltage. The power amplifier 300 may include: a first power amplifier 301 configured to amplify the U-phase input voltage to provide a U-phase output voltage, a second power amplifier 302 configured to amplify the V-phase input voltage to provide a V-phase output voltage, and a third power amplifier 303 configured to amplify the W-phase input voltage to provide a W-phase output voltage. The plurality of electrodes 500 may include: a first electrode 501 to which the U-phase output voltage is applied, a second electrode 502 to which the V-phase output voltage is applied, and a third electrode 503 to which the W-phase output voltage is applied. The matching circuit 400 may include: a first matching circuit 401 connected between the first power amplifier 301 and the first electrode 501 and configured to correct a waveform of the U-phase output voltage provided from the first power amplifier 301, a second matching circuit 402 connected between the second power amplifier 302 and the second electrode 502 and configured to correct a waveform of the V-phase output voltage provided from the second power amplifier 302, and a third matching circuit 403 connected between the third power amplifier 303 and the third electrode 503 and configured to correct a waveform of the W-phase output voltage provided from the third power amplifier 303. The at least one processor 601 may be configured to select one of the U-phase input voltage, the V-phase input voltage, and the W-phase input voltage. When the U-phase input voltage is selected, the at least one processor 601 may be configured to detect a power value corresponding to the rectified U-phase input voltage based on the magnitude of the U-phase output voltage being less than or equal to a defined reference voltage Vr. When the V-phase input voltage is selected, the at least one processor 601 may be configured to detect a power value corresponding to the rectified V-phase input voltage based on the magnitude of the V-phase output voltage being less than or equal to the defined reference voltage Vr, and when the W-phase input voltage is selected, detect a power value corresponding to the rectified W-phase output voltage based on the magnitude of the W-phase output voltage being less than or equal to the defined reference voltage Vr.

The at least one processor 601 may be configured to select one of the U-phase output voltage, the V-phase output voltage, and the W-phase output voltage. When the U-phase output voltage is selected, the at least one processor 601 may be configured to control the first matching circuit 401 to correct the waveform of the amplified U-phase output voltage using the power value corresponding to the rectified U-phase input voltage, based on the magnitude of the U-phase output voltage being less than or equal to the defined reference voltage Vr. When the V-phase output voltage is selected, the at least one processor 601 may be configured to control the second matching circuit 402 to correct the waveform of the amplified V-phase output voltage using the power value corresponding to the rectified V-phase input voltage, based on the magnitude of the V-phase output voltage being less than or equal to the defined reference voltage Vr. When the W-phase output voltage is selected, the at least one processor 601 may be configured to control the third matching circuit 403 to correct the waveform of the amplified W-phase output voltage using the power value corresponding to the rectified W-phase input voltage, based on the magnitude of the W-phase output voltage being less than or equal to the defined reference voltage Vr.

According to an embodiment of the disclosure, a method for controlling a dryer 1 may include: supplying an input voltage through an AC power supply 100; rectifying the supplied input voltage through a rectifier 200; amplifying the rectified input voltage to provide an output voltage through a power amplifier 300; detecting a power value corresponding to the rectified input voltage based on a magnitude of the output voltage being less than or equal to a defined reference voltage Vr; controlling a matching circuit 400 to correct a waveform of the output voltage based on the detected power value; and controlling the power amplifier 300 to apply the output voltage to a plurality of electrodes 500 based on the magnitude of the output voltage being greater than the defined reference voltage Vr.

Accordingly, circuit elements such as sensors may operate normally, while driving a circuit of a dryer 1 using dielectric heating which is driven by high output and high voltage.

In addition, by optimizing and operating a power supply time period and a power value detection time period based on a magnitude of output voltage, a noise occurring when driven by high frequency and high output may be prevented, and power may be efficiently supplied.

Meanwhile, the disclosed embodiments may be implemented in the form of a recording medium that stores instructions executable by a computer. The instructions may be stored in the form of program codes, and when executed by a processor, the instructions may generate a program module to perform the operations of the disclosed embodiments.

The machine-readable recording medium may be provided in the form of a non-transitory storage medium. Here, when a storage medium is referred to as "non-transitory", it may be understood that the storage medium is tangible and does not include a signal (e.g., an electromagnetic wave), but rather that data is semi-permanently or temporarily stored in the storage medium. For example, a "non-transitory storage medium" may include a buffer in which data is temporarily stored.

The method according to various embodiments disclosed herein may be provided in a computer program product. The computer program product may be traded between a seller and a buyer as a product. The computer program product may be distributed in the form of a machine-readable storage medium (e.g., compact disc read only memory (CD-ROM)), or may be distributed (e.g., download or upload) through an application store (e.g., Play Store^{™}) online or directly between two user devices (e.g., smartphones). In the case of online distribution, at least a portion of the computer program product (e.g., downloadable app) may be stored at least semi-permanently or may be temporarily generated in a storage medium, such as a memory of a server of a manufacturer, a server of an application store, or a relay server.

The effects that may achieved by the disclosure are not limited to the above-mentioned effects, and other effects not mentioned will be clearly understood by one of ordinary skill in the technical art to which the disclosure belongs from the following description.

Although embodiments of the disclosure have been described with reference to the accompanying drawings, a person having ordinary skilled in the art will appreciate that other specific modifications may be easily made without departing from the technical spirit or essential features of the disclosure. Therefore, the foregoing embodiments should be regarded as illustrative rather than limiting in all aspects.

## Claims

1. A dryer, comprising:
an alternating current (AC) power supply configured to supply an input voltage;
a rectifier configured to rectify the supplied input voltage;
a power amplifier configured to amplify the rectified input voltage to provide an output voltage;
a plurality of electrodes to which the output voltage is applied;
a matching circuit connected between the power amplifier and the plurality of electrodes and configured to correct a waveform of the output voltage provided from the power amplifier; and
at least one processor configured to detect a power value corresponding to the rectified input voltage and obtain a magnitude of the output voltage provided from the power amplifier,
wherein the at least one processor is configured to detect the power value corresponding to the rectified input voltage, based on the magnitude of the output voltage provided from the power amplifier being less than or equal to a defined reference voltage.

2. The dryer of claim 1, wherein the at least one processor is configured to control the power amplifier to apply the output voltage to the plurality of electrodes, based on the magnitude of the output voltage provided from the power amplifier being greater than the defined reference voltage.

3. The dryer of claim 1, wherein the at least one processor is configured to control the matching circuit to correct the waveform of the output voltage based on the detected power value.

4. The dryer of claim 1, wherein the at least one processor is configured to control the power amplifier to apply the output voltage to the plurality of electrodes, based on the magnitude of the output voltage being greater than a first voltage value, in response to a magnitude of supply power being greater than a preset first power value.

5. The dryer of claim 4, wherein the at least one processor is configured to:
in response to the magnitude of the supply power being greater than the preset first power value, control the power amplifier to apply the output voltage to the plurality of electrodes, based on the magnitude of the output voltage being greater than the first voltage value, and
control the power amplifier to apply the output voltage to the plurality of electrodes, based on the magnitude of the output voltage being greater than a second voltage value in an arbitrary time period, and
the second voltage value is greater than the first voltage value.

6. The dryer of claim 1, wherein the at least one processor is configured to:
in response to a magnitude of supply power being less than a preset second power value, control the power amplifier to apply the output voltage to the plurality of electrodes, based on the magnitude of the output voltage being greater than a second voltage value, and
the preset second power value is less than a preset first power value.

7. The dryer of claim 1, wherein the at least one processor is configured to:
determine a third voltage value that is greater than or equal to a first voltage value and less than or equal to a second voltage value, based on a magnitude of supply power, in response to the magnitude of the supply power being less than or equal to a preset first power value and greater than or equal to a preset second power value; and
control the power amplifier to apply the output voltage to the plurality of electrodes, based on the magnitude of the output voltage being greater than or equal to the determined third voltage value, and
the preset second power value is less than the preset first power value, and the second voltage value is greater than the first voltage value.

8. The dryer of claim 2, wherein the at least one processor is configured to:
identify whether a previously detected power value exists based on the magnitude of the output voltage being less than or equal to the defined reference voltage;
in response to identifying that the previously detected power value exists, control the matching circuit to correct the waveform of the output voltage based on the previously detected power value; and
in response to identifying that the previously detected power value does not exist, detect the power value corresponding to the rectified input voltage.

9. The dryer of claim 2, wherein the at least one processor is configured to obtain a first operation time during which the output voltage is applied.

10. The dryer of claim 9, wherein the at least one processor is configured to:
decrease the defined reference voltage, based on the obtained first operation time being less than a time required to apply an output voltage corresponding to a magnitude of supply power; and
increase the defined reference voltage, based on the obtained first operation time exceeding the time required to apply the output voltage corresponding to the magnitude of the supply power.

11. The dryer of claim 10, wherein the at least one processor is configured to determine a magnitude by which the defined reference voltage is increased or decreased, based on a difference between the obtained first operation time and the time required to apply the output voltage corresponding to the magnitude of the supply power.

12. The dryer of claim 1, wherein the at least one processor is configured to obtain a second operation time during which the power value is detected.

13. The dryer of claim 12, wherein the at least one processor is configured to:
increase the defined reference voltage, based on the obtained second operation time being less than a time required to detect the power value; and
decrease the defined reference voltage, based on the obtained second operation time exceeding the time required to detect the power value.

14. The dryer of claim 13, wherein the at least one processor is configured to determine a magnitude by which the defined reference voltage is increased or decreased, based on a difference between the obtained second operation time and the time required to detect the power value.

15. The dryer of claim 3, wherein the at least one processor is configured to obtain a third operation time during which the waveform of the output voltage is corrected.
